# EUROPEAN PATENT SPECIFICATION

(11) **EP 2 272 903 B1**
(45) Date of publication and mention of the grant of the patent: **21.03.2012**
(21) Application number: 10460026.7
(22) Date of filing: 21.06.2010
(51) Int. Cl.: C08J 11/06, C08J 11/08

(54) **Method for recycling products containing polyethylene fibres with an ultra-high molecular weight**
Recycling von Erzeugnissen mit einem Gehalt an Polyethylenfasern mit ultrahoher Molekülmasse
Methode pour le recyclage de produits contenant du polyéthylène de très haut poids moléculaire

(30) Priority: 20.06.2009 PL 38833509
(43) Date of publication of application: 12.01.2011
(73) Proprietor: Instytut Technologii Bezpieczeñstwa "Moratex", 90-965 Lódz (PL); Centrum Badan Molekularnych I Makromolekularnych Polskiej Akademii Nauk, 90-363 Lodz (PL)
(72) Inventor: Galeski, Andrzej, 94-123 Lódz (PL); Rózanski, Artur, 91-327 Lódz (PL); Redlich, Grazyna, 94-054 Lódz (PL); Fortuniak, Krystyna, 94-003 Lódz (PL); Moraczewski, Andrzej, 93-256 Lódz (PL)

(56) References cited:
- Earle E. Day: "Technical Report N°16: Continuous Extrusion of Recovered Ultra-High Molecular Weight Polyethylene" Chelsea Center for Recycling and Economic Development INTERNET January 2000 (2000-01), pages 1-6, XP002604640 Chelsea,Massachusetts,USA Retrieved from the Internet: URL:http://www.chelseacenter.org/pdfs/Tech Report16.pdf [retrieved on 2010-10-12]
- G. HINRICHSEN ET AL.: "Production and Characterization of UHMWPE Fibers/LDPE Composites" MECHANICS OF COMPOSITE MATERIALS, vol. 32, no. 6, 1996, XP002604641

## Description

The subject-matter of the invention is the material method for recycling products containing polyethylene fibers with an ultra-high molecular weight, especially ballistic multilayer sheet packs.

So far, the material recycling of technological and after-utility waste of ballistic sheet packs containing polyethylene fibers with an ultra-high molecular weight, identified as UHMW-PE, has not been done, such waste being landfilled on landfill sites or incinerated.

The subject-matter of the invention is the method for recycling by processing sheet product waste coming from the job processing of ballistic packs, specifically for vests, as well as packs damaged or taken out of service past the guarantee period, made up of UHMW-PE polyethylene fibers with a molecular weight from 10⁶ to 9x10⁶ g/mol, retaining the advantageous characteristics of the fibers, especially the strength thereof.

The referenced fibers are characterized by the parallel macromolecular orientation, crystallinity level up to 85%, melting point above 145°C, tenacity from 2 GPa to 6 GPa with an extension in the 3-5% range and modulus of elasticity from 80 GPa to 110 GPa. The above-mentioned characteristics determine the application of the fibers in soft protective ballistic products.

UHMW-PE fibers are used in both standard fabrics and specially designed unwoven sheets with elevated ballistic properties. Ballistic sheets are made up of two layers with an orientation 0°/90°, each consisting of UHMW-PE fibers layered in parallel, which plies are joined together and to low or average density polyethylene covering sheeting by means of thermoplastic binder. Polyethylene sheet products are used for the job processing of soft multilayer protective packs with a number of layers dependent on the assumed level of ballistic resistance of the end product.
Ballistic packs contain UHMW-PE fibers in an amount of 70-75%, thermoplastic binder in an amount of 10-20% and low or average density polyethylene covering sheeting in an amount of 8-15%.

The method according to the invention consists in the process in which sheet products and/or waste are comminuted by cutting into fragments containing UHMW-PE fibers 100 µm to 10 mm long, then adding low or average density granular or powdered polyethylene in an amount up to 80% of the weight to the received batch of the cut mass, heating to a temperature lower than the melting point of UHMW-PE fibers by minimum 15°C and, maintaining the prescribed temperature, mixing until homogenization of the mass and cooling. In the alternative variant of the solution, the cut mass is treated with a suitable thermoplastic binder solvent, its solid part being separated and dried; the follow-up to the process proceeds as in the first variant, using the cut mass not deprived of the binder.
The received composite with a matrix of low or average density polyethylene, containing cut UHMW-PE fibers of intact texture, with a possible small addition of polymer binder, is applicable to injection molded, extruded, press molded and heat formed products, which are marked by a minimum two-and-a-half-fold increase in strength provided the processing is done at a temperature lower than the melting point of UHMW-PE fibers, preferably in the 120-130°C range.
Products made up of the composite containing intact fragments of UHMW-PE fibers have great functional, mechanical and esthetic advantages.
The composite without thermoplastic binder is marked by a higher endurance than that containing the binder.
In case the texture of UHMW-PE fibers is damaged as a result of a temperature elevated above the melting point thereof during the composite production or conversion process, the received products show no significant rise in strength compared to standard ones.

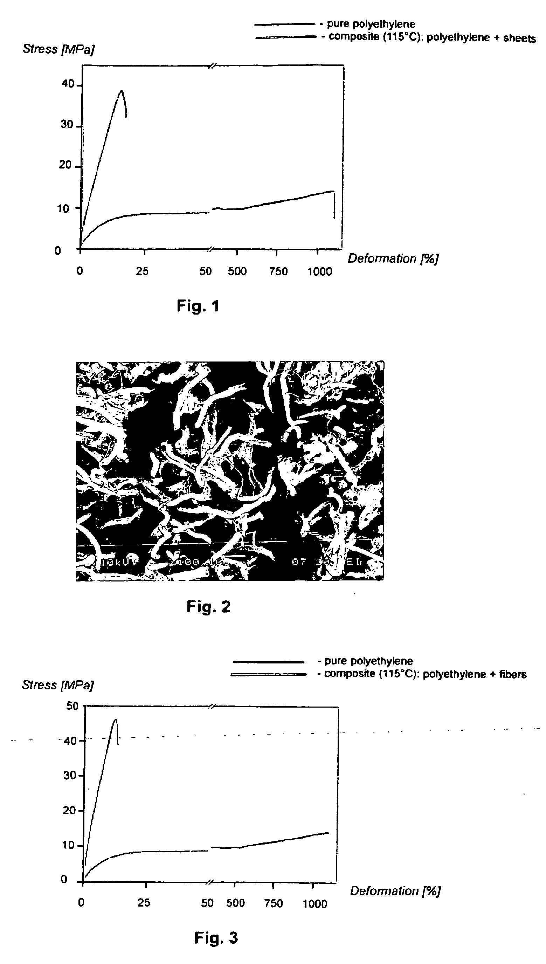

Fig. 1 represents the stress-deformation relation in the composite containing binder and pure polyethylene, while Fig. 2 shows the image of the composite fracture under the scanning electron microscope, and- Fig. 3 - the stress-deformation relation in the composite without binder and pure polyethylene.
**Performance model I**. Ballistic sheet technological waste, containing an average of 73% of UHMW-PE fibers with the melting point of 153°C, 10% of low density polyethylene with the melting point of 122°C in the form of covering sheeting and 17% of polyisoprene used as thermoplastic binder, is cut into fragments of the dimensions 5 mm x 5 mm.
The amount of 29.5 g of low density granular polyethylene with the melting point of 112°C is added to the 20.5 g portion of the cut mass. The mixture is then heated to the temperature of 115°C and stirred at an approximate velocity of 20 rpm for 15 minutes, maintaining the constant temperature in the 120-130°C range. Next, the composite mixture is solidified by cooling to room temperature, which is followed by molding sheeting 1 mm thick at the temperature of 125°C. For comparison, low density pure polyethylene sheeting is molded in the same conditions. Samples for mechanical tension tests are cut out of both the sheeting types. The tension tests are conducted at room temperature at a speed of 5 mm/minute. The stress-deformation relation for the composite and pure polyethylene is shown in Fig. 1 enclosed.
The received composite, containing the intact texture of UHMW-PE fibers, shows a considerably higher mechanical tensile strength than low density covering sheeting polyethylene as well as polyethylene added to the composite. The image of the composite fracture under the scanning electron microscope is presented in Fig. 2.
**Performance model II**. Ballistic sheet technological waste, containing an average of 73% of UHMW-PE fibers with the melting point of 153°C, 10% of low density polyethylene with the melting point of 122°C in the form of covering sheeting and 17% of polyisoprene used as thermoplastic binder, is cut into fragments of the dimensions 5 mm x 5 mm.
The contained polyisoprene is extracted from the received cut mass by soaking in chloroform, flushing with chloroform and vaporizing the residual chloroform in a vacuum drier. The amount of 33 g of low density granular polyethylene with the melting point of 112°C is added to the portion of the thus prepared material weighing 17 g. The mixture is heated to the temperature of 115°C and stirred at an approximate velocity of 20 rpm for 15 minutes, maintaining the constant temperature in the 120-130°C range. The composite mixture is solidified by cooling to room temperature; which is followed by molding sheeting 1 mm thick at the temperature of 125°C. For comparison, low density pure polyethylene sheeting is molded in the same conditions. Samples for mechanical tension tests are cut out of both the sheeting types. The tension tests are conducted at room temperature at a speed of 5 mm/minute. The stress-deformation relation for the composite without binder and pure polyethylene is shown in Fig. 3 enclosed.

## Claims

1. The method for recycling products containing polyethylene fibers with an ultra-high molecular weight, retaining the advantageous characteristics of the fibers, marked by the process in which products and/or waste containing 70-75% of UHMW-PE polyethylene fibers, with a molecular weight from 10⁶ to 9x10⁶ g/mol and melting point above 145°C, thermoplastic binder in an amount of 10-20% and low or average density polyethylene covering sheeting, in an amount of 8-15%, are comminuted by cutting into fragments containing UHMW-PE fibers 100 µm to 10 mm long, then adding low or average density granular or powdered polyethylene in an amount up to 80% of the weight to the received batch of the cut mass, heating to a temperature lower than the melting point of UHMW-PE fibers by minimum 15°C and, maintaining the prescribed temperature, mixing until homogenization of the mass and cooling, to undergo further treatment at a temperature lower than the melting point of UHMW-PE fibers.

2. The method for recycling products containing polyethylene fibers with an ultra-high molecular weight, marked by the process in which products and/or waste containing 70-75% of UHMW-PE polyethylene fibers, with a molecular weight from 10⁶ to 9x10⁸ g/mol and melting point above 145°C, thermoplastic binder in an amount of 10-20% and low or average density polyethylene covering sheeting, in an amount of 8-15%, are comminuted by cutting into fragments containing UHMW-PE fibers 100 µm to 10 mm long, treated with binder solvent and flushed with the same solvent, evaporating the residual solvent, then adding low or average density granular or powdered polyethylene in an amount up to 80% of the weight to the received batch of the cut mass, heating to a temperature lower than the melting point of UHMW-PE fibers by minimum 15°C and, maintaining the prescribed temperature, mixing until homogenization of the mass and cooling, to undergo further treatment at a temperature lower than the melting point of UHMW-PE fibers.

## Patentansprüche

1. Recycling-Methode für Produkte mit Polyethylenfasern mit ultrahoher Molekülmasse, bei der die vorteilhaften Eigenschaften der Faser erhalten bleiben, *charakteristische **dadurch**,* dass die Produkte und/oder Abfälle, die 70-75 % Polyethylenfasern UHMW-PE, mit Molekülmasse von 10⁶ bis 9x10⁶ g/mol und Schmelztemperatur über 145° C, thermoplastische Klebstoff in Mengen von 10-20 % sowie Schutzfolie aus Polyethylen niedriger oder mittlerer Dichte in Mengen von 8-15 % durch Schneiden in Fragmente, die Fasern UHMW-PE von Länge von 100 µm do 10 mm enthalten, zerkleinert werden und danach zu den gewonnenen Scheiben Polyäthylen als Granulat oder Pulver von geringer oder mittlerer Dichte für bis zu 80 % des Gewichts zugegeben wird, danach diese Mischung bis zu Temperatur, die mindestens um 15° C von der Schmelztemperatur von Fasern UHMW-PE niedriger ist, erhitzt wird und danach bei Erhaltung dieser Temperatur bis Homogenisierung der Masse gemischt, abgekühlt und weiter bei einer Temperatur niedriger als Schmelzpunkt UHMW-PE behandelt wird.

2. Recycling-Methode für Produkte mit Polyethylenfasern mit ultrahoher Molekülmasse, bei der die vorteilhaften Eigenschaften der Faser erhalten bleiben, *charakteristische **dadurch**,* dass die Produkte und/oder Abfälle, die 70-75 % Polyethylenfasern UHMW-PE, mit Molekülmasse von 10⁶ bis 9x10⁶ g/mol und Schmelztemperatur über 145° C, thermoplastische Klebstoff in Mengen von 10-20 % sowie Schutzfolie aus Polyethylen niedriger oder mittlerer Dichte in Mengen von 8-15 % durch Schneiden in Fragmente, die Fasern UHMW-PE von Länge von 100 µm do 10 mm enthalten, zerkleinert werden, der Klebstoff mit Lösemittel behandelt, mit dem gleichen Lösemittel ausgespült wird und die Reste des Lösemittels verdampft werden und danach zu den gewonnenen Scheiben Polyäthylen als Granulat oder Pulver von geringer oder mittlerer Dichte für bis zu 80 % des Gewichts zugegeben wird, danach diese Mischung bis zu Temperatur, die mindestens um 15° C von der Schmelztemperatur von Fasern UHMW-PE niedriger ist, erhitzt wird und danach bei Erhaltung dieser Temperatur bis Homogenisierung der Masse gemischt, abgekühlt und weiter bei einer Temperatur niedriger als Schmelzpunkt UHMW-PE behandelt wird.

## Revendications

1. Méthode de recyclage des produits contenant des fibres de polyéthylène à ultra haute masse moléculaire, conservant les caractéristiques favorables de ces fibres, ***caractérisée par le fait* que** les produits et/ou déchets contenant 70-75% de fibres de polyéthylène UHMW-PE, d'une masse moléculaire de 10⁶ à 9x10⁶ g/mol et d'un point de fusion supérieur à 145°C, du liant thermoplastique en quantité de 10-20% et un écran en film de polyéthylène à faible ou moyenne densité, en quantité de 8-15%, sont fragmentés par découpage en morceaux contenant des fibres d'UHMW-PE d'une longueur de 100 µm à 10 mm, puis, à une partie de ce résultat de découpage est ajouté du polyéthylène granulé ou en poudre à faible ou moyenne densité, en quantité jusqu'à 80% en masse, le mélange est chauffé à une température inférieure d'au moins 15°C au point de fusion des fibres d'UHMW-PE et, tout en maintenant la température consignée, agité jusqu'à l'obtention d'une masse homogène, refroidi puis soumis au traitement ultérieur à une température inférieure au point de fusion des fibres d'UHMW-PE.

2. Méthode de recyclage des produits contenant des fibres de polyéthylène à ultra haute masse moléculaire, ***caractérisée par le fait* que** les produits et/ou déchets contenant 70-75% de fibres de polyéthylène UHMW-PE, d'une masse moléculaire de 10⁶ à 9x10⁶ g/mol et d'un point de fusion supérieur à 145°C, du liant thermoplastique en quantité de 10-20% et un écran en film de polyéthylène à faible ou moyenne densité, en quantité de 8-15%, sont fragmentés par découpage en morceaux contenant des fibres d'UHMW-PE d'une longueur de 100 µm à 10 mm, traités au solvant du liant, rincés avec le même solvant ; les résidus de solvant sont évaporés, puis, à une partie de ce résultat de découpage est ajouté du polyéthylène granulé ou en poudre à faible ou moyenne densité, en quantité jusqu'à 80% en masse, le mélange est chauffé à une température inférieure d'au moins 15°C au point de fusion des fibres d'UHMW-PE et, tout en maintenant la température consignée, agité jusqu'à l'obtention d'une masse homogène, refroidi puis soumis au traitement ultérieur à une température inférieure au point de fusion des fibres d'UHMW-PE.
